# EUROPEAN PATENT APPLICATION

(11) **EP 0 860 264 A1**
(43) Date of publication of application: **26.08.1998**
(21) Application number: 97301145.5
(22) Date of filing: 21.02.1997
(51) Int. Cl.: B29C 47/20, B29C 47/92

(54) **Improvements in or relating to the manufacture of plastics pipes**

(71) Applicant: The University of Wales, Swansea, Swansea SA2 8PP (GB)
(72) Inventor: Pittman, John Frank Townsend , Dr., Singleton Park, Swansea SA2 8PP (GB); Farah, Iyad Anton, Dr., Singleton Park, Swansea SA2 8PP (GB)
(74) Representative: Downing, Michael Philip

(57) **Abstract**

The applications discloses a solution to the problem of sag in the extrusion of plastics pipes. It does so by employing a mandrel of non-circular cross-section. A computer simulation shows that the use of a non-circular mandrel can more precisely compensate sag than a simple mandrel offset as previously employed, thereby giving a finished pipe with more uniform wall thickness. Often it will be advisable to employ an offset together with the non-circular mandrel, to achieve an optimum result. The term non-circular is intended to refer to a profile which is continuously curved, with no edges; ie a deformed circular profile. A suitable shape is a egg profile.

## Description

The present invention relates to improvements in the manufacture of plastics pipes.

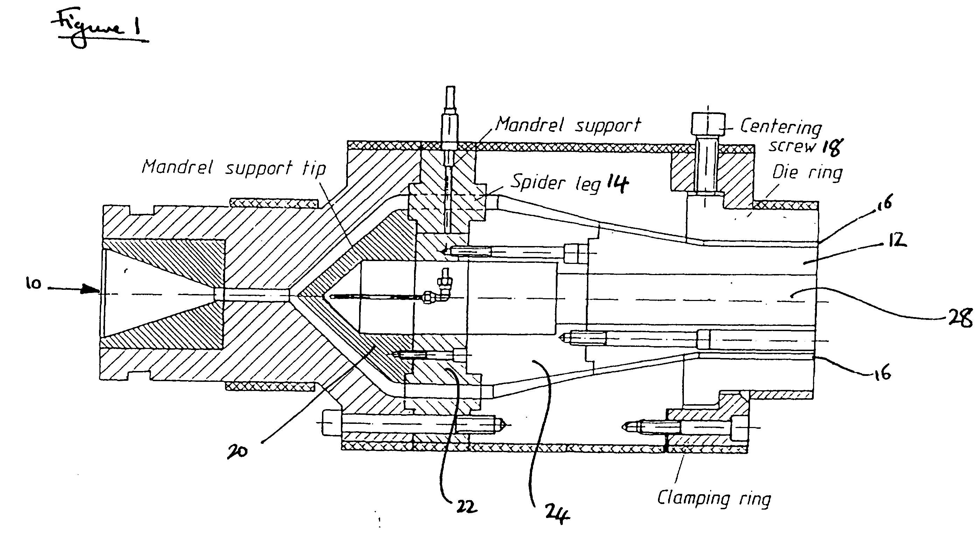

Plastics pipe is typically manufactured by extrusion of molten polymer, typically at 150 to 200°C, from an annular die. Figure 1 shows a known arrangement for extrusion. Immediately downstream of the die the extrudate is cooled, usually by passing through a number of tanks, where coolant water is applied to the pipe outer surface. The circular geometry of the outer pipe surface is quite closely determined by the use of a calibrating sleeve and rapid solidification of the outer surface. The geometry of the inner surface, though, is less easy to control. Due to the low thermal diffusivity of plastics, thick walled pipes can take some hours to cool completely, and in the (usual) case where cooling is applied to the outer surface only, material near the pipe bore remains molten for a considerable time, during which it can flow slowly downwards under the influence of gravity. This 'sag' tends to result in a pipe with a thicker wall at the base than at the top. Uneven wall thickness is highly undesirable, because the performance of the pipe is governed by the thinnest part of the wall, and polymer in the thicker parts is largely wasted. In addition, specifications usually place strict limits on wall thickness variation. In the manufacture of large, thick walled pipes, where substantial sag can occur, it is often difficult to meet such specifications and this is a major manufacturing difficulty.

A widely used technique to compensate for sag is to offset the mandrel (the inner part of the die) so as to extrude a pipe that is thicker at the top than at the base; sag during the cooling process then reduces this difference, resulting in a finished pipe with more uniform wall thickness. This can be quite effective for medium size pipes (e.g. 315 mm SDR 11 MDPE), but becomes progressively less effective for larger pipes.

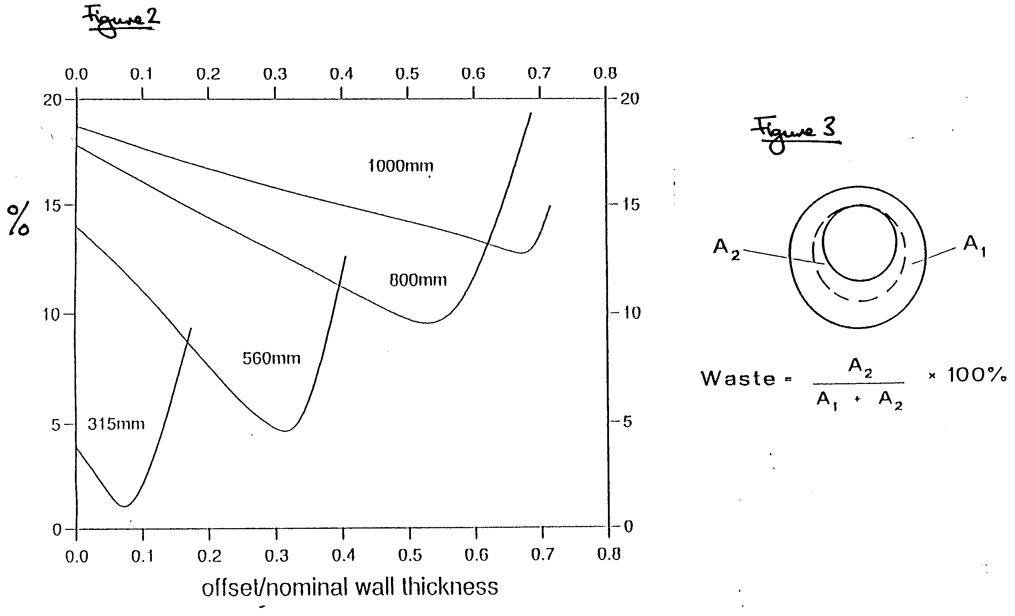

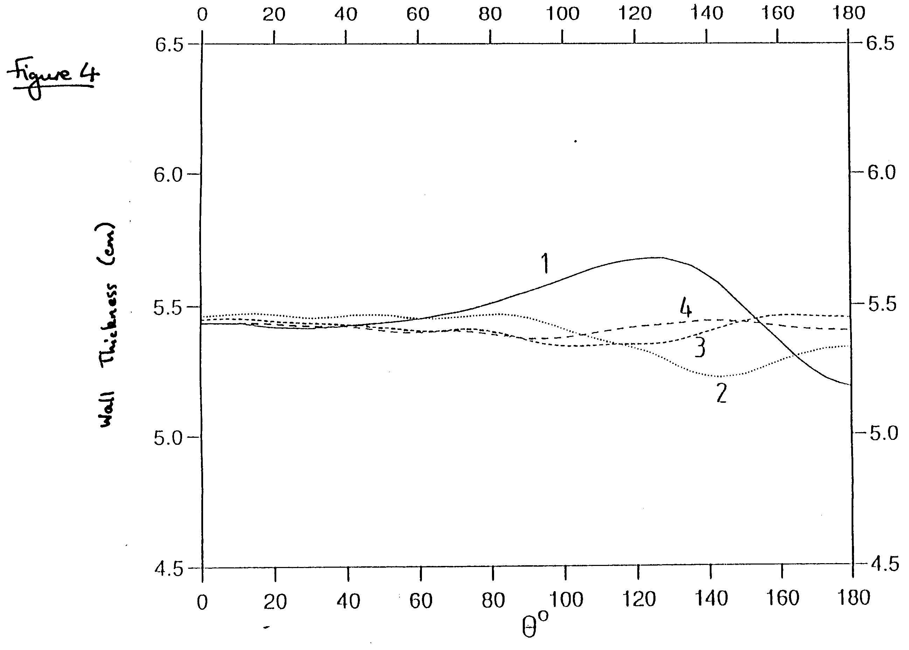

A computer simulation of the polymer flow during cooling using Finite Element Analysis, has been proposed, and published at Intern. Polymer Processing IX (1994), page 130 et seq. Figure 2 shows a plot produced by this model showing how the % wasted polymer varies with the offset as a fraction of the wall thickness for pipes of various diameters. The % wastage is defined as shown in Figure 3. It can be seen that large diameter pipes require very large offsets but still result in large amounts of wasted polymer.

It is proposed, according to a first aspect of the present invention, to employ a mandrel of non-circular cross-section. The computer simulation mentioned above has confirmed that the use of a non-circular mandrel can more precisely compensate sag than a mere offset, giving a finished pipe with more uniform wall thickness. Often it will be advisable to employ an offset together with the non-circular mandrel, to achieve an optimum result.

The term non-circular used herein is intended to refer to a profile which is continuously curved, with no edges; ie a deformed circular profile.

The exact optimum departure from circularity is dependent on the conditions involved in each case. What is essential is that more material is extruded in the upper portion of the pipe. Generally therefore, the radius of curvature of the new surface of the upper portion of the mandrel will be smaller than the radius of curvature of the lower portion; ie the mandrel could be considered to have a slightly egg-shaped profile.

The present invention also proposes, in its second aspect, a method of optimising a mandrel profile comprising the steps of:
(i) establishing a model for the polymer flow on cooling of an extruded plastics pipe;
(ii) generating, through the model, a sequence of temperature fields for the polymer material during cooling starting from an initial extruded profile;
(iii) running the model in reverse time, from a substantially circular end-profile, employing the temperature data generated in step (ii), to arrive at a new initial profile;
(iv) successively iterating steps (ii) and (iii).

It is not possible simply to run the model backwards from a final, uniform circular profile since although the flow problem is effectively inertia-less, and hence reversible, the heat transfer problem is not. Reversing time is equivalent to the use of a negative thermal conductivity which renders conduction equations unconditionally unstable. The present method uses an approximate iterative method which will often avoid this problem.

The required mandrel profile could alternatively be found by a computerised optimisation procedure, wherein the model mentioned at (i) above is used to evaluate an appropriate objective function related to wall thickness uniformity; or, the model could be used in simple trial and error procedure to determine an optimal, or, at least, improved mandrel profile. An optimal or improved mandrel profile might be found by experimental trial and error, though this is likely to be difficult and expensive.

The optimised profile will depend on polymer properties and processing conditions. Hence, the practical application preferably involves interchangeable sections at the downstream end of the mandrel. These preferably include a region making a smooth transition from a circular up-stream mandrel profile to a sufficiently long parallel land section having substantially the optimised profile. Since material properties and processing conditions are largely standardised, a limited number of such end sections could be provided. Small variations in properties or conditions may render the best such profile achievable sub-optimal, but it should nevertheless still give better results than the conventional circular profile.

For unusually large, thick-walled pipes (e.g. 800 mm SDR11 MDPE) application of the above iterative optimisation does not produce a convergent result. That is to say, successive iterations do not produce a profile which successively approaches an optimised profile, but produces a series of profiles which successively depart further from circularity. The inference from this is that mandrel profiling alone cannot produce highly uniform wall thickness.

The present invention therefore proposes, in its third aspect, circumferential variation of temperature or cooling rates of the extruded polymer such that initially thin-walled regions of the pipe dwell at a higher temperature or for a longer time.

This is believed to be of benefit since, in its absence, solidification of the polymer near the inner surface may occur before it has been able to complete its flow and thus fill the thin area at the base of the pipe. A frozen 'wave' may thus form around the 5 o'clock and 7 o'clock positions. This is prevented, according to this aspect of the invention, by relatively raising the temperature of the lower, inner part of the extrudate by the use of zone-controlled mandrel heating; or by reducing the cooling rate of the lower part of the pipe by, for example, including longitudinal baffles in the cooling tanks, and applying a less intense water spray beneath these to the lower part of the pipe.

The above methods can be summarised by requiring that the polymer material in the lower portion of the pipe dwells at a higher temperature than that in the upper portion.

Embodiments of the present invention will now be described by way of example, with reference to the accompanying figures, in which;
Figure 1 shows a typical pipe extrusion die;
Figure 2 shows results from computer simulations showing percentage waste as a function of mandrel offset, for different size SDR11 MDPE pipes;
Figure 3 is a diagram defining the percentage waste of figure 2;
Figure 4 shows the final pipe profile results of an iterative procedure for calculating the optimum non-circular mandrel profile.
Figure 5 shows the effective die mandrel profile of an optimum offset circular mandrel and the computed optimum non-circular mandrel according to the present invention.

Figure 1 shows a typical pipe extrusion die. Molten polymer enters from the extruder on the left at 10, flows around the mandrel 12 which is held in placed by "spider legs" 14 and flows out of the annular exit 16 to the right. The die is shown with the mandrel 12 concentric with the outer die body, but an offset can be provided through use of the centering screw 18.

It can be seen that the mandrel 12 is composed of four discrete sections 20,22,24 and 28. These are held in sequential order by bolts, as shown in figure 1.

Figures 2 and 3 show the results of computer simulations in terms of the percentage waste as a function of mandrel offset, for different size SDR 11 MDPE pipes. Pipes of diameter 315, 560, 800 and 1,000mm were simulated. The percentage waste is defined as in figure 3. The mandrel offset is given in terms of the ratio of the offset to the nominal wall thickness.

It can be seen that provision of a mere offset can be effective for pipes of small diameter, up to 315mm. However, the waste is still significant. As the pipe diameter increases, the necessary offset becomes progressively greater and the minimum waste achievable becomes progressively less. The situation is at its most extreme for the 1,000mm pipe, where the minimum waste achievable is approximately 12.5% at an offset of nearly 70% of the wall thickness. It is by no means certain that a 70% offset is a practical proposition.

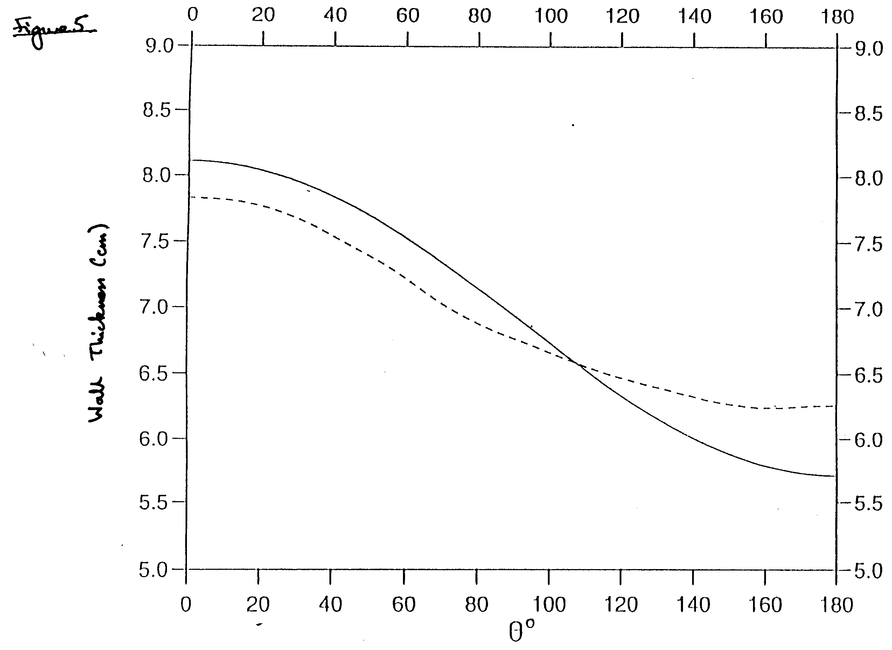

Figure 4 shows the results of applying the iterative method of the present invention. Figure 4 consists of a plot of the final (resultant) wall thickness of an extruded plastics pipe after cooling. Since the cooling situation is symmetric about the central vertical axis of the pipe, the thickness is plotted against θ varying from 0 (top centre) to 180° (base).

Line 1 is the result of applying the simulation to a pipe extruded from a circular mandrel with optimum offset. It can be seen that there are indefinite non-uniformities in the final thickness. The various temperature/time fields are stored from that run, and then the computer simulation is run in reverse time starting with a perfect circular end product and using the historic temperature data generated in the first run. This results in a calculation of a non-circular starting pipe. From the shape of this starting extrudate, an improved non-circular mandrel shape is inferred. The simulation is then re-run starting with the pipe extruded from that improved mandrel. The resulting final pipe profile is shown as line 2. It can be seen that line 2 shows significantly less dimensional irregularities than line 1.

The process is repeated successively to produce lines 3 and 4 representing successively optimised pipes. It can be seen that pipe 4 has very small dimensional irregularities, of the order of 1.2% as compared to 9.1% for the circular mandrel.

The particular pipe chosen for this test was a 560mm SDR 11 MDPE pipe. The simulated polymer extrudate was medium density polyethylene having a melt flow index (MFI) of (190°C/2.16kg) 0.2g per 10 minutes.

Figure 5 shows the mandrel profiles corresponding to plots 1 and 4 of Figure 4. The solid line is the optimum offset circular mandrel, as compared with the optimised non-circular mandrel shown in dotted, computed according to the method of the present invention.

The plot is shown as extruded wall thickness versus θ. The exact thicknesses are somewhat greater than those of figure 4, as a result of thermal shrinkage on cooling of the extruded pipe.

These results were for a 560mm SDR 11 MDPE pipe as with figure 4. It can be seen that the optimum profile, surprisingly, extrudes a greater thickness at the bottom of the pipe than at the top, as compared with a circular mandrel with the optimum offset.

From Figure 1 it was seen that the mandrel comprised a number of interconnected sections 20,22,24 and 28 held together by bolts. It is therefore feasible to replace, for example, only the final section 28 by the non-circular element. The replaceable element could comprise a number of sections which are interchangeable so as to vary the non-circular profile of the mandrel to suit particular polymer characteristics and processing conditions.

Regrettably, application of the iterative technique to extremely large pipes does not produce a convergent result. That is to say, the successive plots 1,2 and 3 etc corresponding to those of figure 4 do not converge on uniformity.

Consideration of this difficulty by the present inventors has arrived at the conclusion that this is due to the very thin-walled lower part of the pipe as extruded cooling to solidification before material from the upper regions can flow thereto. Thus, a frozen "wave" of material forms at approximately the 5 o'clock and 7 o'clock positions.

To overcome this difficulty, embodiments of the present invention involve maintaining this region of the pipe as extruded at a higher temperature relative to the remainder of the pipe. Thus, this area of the pipe wall is prevented from solidification and the process can be completed. The maintenance of this temperature differential can be achieved either through positive heating of this area, or by reduced cooling effects. Cooling is habitually by way of an external water spray, in which case suitably positioned baffles at approximately the 4 and 8 o' clock positions will deflect a certain amount of cooling spray and maintain a higher relative temperature. Alternatively, a heat source could be provided facing the corresponding areas.

It will be appreciated that this differential heating effect can be applied to a pipe formed by a conventional, offset circular mandrel, or by the non-circular mandrel of the present invention.

It will be appreciated by those skilled in the art that many modifications to the above described examples are possible without departing from the scope of the present invention.

## Claims

1. Apparatus for the manufacture by extrusion of a substantially circular annular section of plastics material, comprising a mandrel of non-circular cross-section within an extrusion die.

2. Apparatus according to claim 1 wherein the mandrel is offset with respect to the central axis of the annular section.

3. Apparatus according to claim 1 or claim 2 wherein the radius of curvature of the upper portion of the mandrel is smaller than the radius of curvature of the lower portion.

4. Apparatus according to an preceding claim wherein the mandrel includes interchangeable sections at the downstream end thereof.

5. Apparatus according to claim 4 wherein the interchangeable sections include a region making a smooth transition from a circular up-stream mandrel profile to a sufficiently long parallel land section having the said non-circular cross-section.

6. Apparatus according to any preceding claim including means for establishing circumferential variation of at least one of temperature or cooling rates of the extruded polymer arranged to cause initially thin-walled regions of the extruded annular section to dwell at a higher temperature or for a longer time.

7. Apparatus according to claim 6 wherein the said means relatively raises the temperature of the lower, inner part of the extrudate by the use of zone-controlled mandrel heating.

8. Apparatus according to claim 6 wherein the said means reduces the cooling rate of the lower part of the extruded annular section.

9. Apparatus according to claim 8 wherein the said cooling rate reduction is achieved by at least one of (i) providing longitudinal baffles in the cooling tanks (ii) applying a less intense water spray beneath these to the lower part of the extruded annular section.

10. Apparatus according to any preceding claim for extrusion of a plastics pipe.

11. Pipe extrusion apparatus substantially as any one herein described with reference to and/or as illustrated in the accompanying drawings.

12. Apparatus according to any preceding claim wherein extrusion takes place substantially horizontally.

13. A pipe manufactured of plastics material through the use of apparatus according to any preceding claim.

14. A method of manufacturing plastics pipe comprising employing apparatus according to any one of claims 1 to 11.

15. A method of optimising a mandrel profile comprising the steps of:
(i) establishing a model for the polymer flow on cooling of an extruded plastics pipe;
(ii) generating, through the model, a sequence of temperature fields for the polymer material during cooling starting from an initial extruded profile;
(iii) running the model in reverse time, from a substantially circular end-profile, employing the temperature data generated in step (ii), to arrive at a new initial profile;
(iv) successively iterating steps (ii) and (iii).

16. A method according to claim 15 wherein the model of step (i) is used to evaluate an objective function related to wall thickness uniformity.

17. A method according to claim 15 wherein the model of step (i) is used in a trial and error procedure to determine an improved mandrel profile.

18. A method of manufacturing a pipe extrusion apparatus comprising the step of optimising the mandrel profile by application of the method of any one of claims 15 to 17.

19. A pipe extrusion apparatus manufactured by a method according to claim 18.
